# EUROPÄISCHE PATENTSCHRIFT

(11) **EP 0 656 154 B1**
(45) Veröffentlichungstag und Bekanntmachung des Hinweises auf die Patenterteilung: **14.02.1996**
(21) Anmeldenummer: 93919069.0
(22) Anmeldetag: 16.08.1993
(51) Int. Cl.: H01M 10/54, H01M 6/52

(54) **VERFAHREN ZUR ENTSORGUNG VON NATRIUM-SCHWEFEL-SPEICHERZELLEN**
PROCESS FOR DISPOSING OF SODIUM-SULPHUR ACCUMULATOR CELLS
PROCEDE D'ELIMINATION DE CELLULES ACCUMULATRICES AU SOUFRE-SODIUM

(30) Priorität: 20.08.1992 DE 4227511
(43) Veröffentlichungstag der Anmeldung: 07.06.1995
(73) Patentinhaber: SILENT POWER GMBH, D-45128 Essen (DE)
(72) Erfinder: HAMMER, Hartmut, D-50968 Köln (DE); WINKLER, Dieter, D-50389 Wesseling (DE)
(74) Vertreter: Flaccus, Rolf-Dieter, Dr.
(86) Internationale Anmeldenummer: EP9302181
(87) Internationale Veröffentlichungsnummer: WO9405054

(56) Entgegenhaltungen:
- EP-A- 0 413 275
- EP-A- 0 433 654
- US-A- 5 015 541

## Beschreibung

Die Erfindung betrifft ein Verfahren zur Entsorgung von Natrium-Schwefel-Speicherzellen.

Durch steigenden Verbrauch von Na-S-Speicherzellen besteht die Aufgabe, diese Speicherzellen aufzubereiten und die Bestandteile der Zelle zu verwerten.
Es ist bekannt, nach der deutschen Offenlegungsschrift 39 27 225 Speicherzellen in wachsartige Materialien wie Paraffin einzubetten, das Natrium durch Aufschmelzen zu entfernen und die Schwefelelektroden und die Gehäusematerialien getrennt zu entnehmen und zu verwerten.
Weiter ist aus der europäischen Patentanmeldung 0 433 654 bekannt, die Zellen zu schroten und durch Zugabe von Natriumcyanid und Wasser Natriumthiocyanat zu bilden. Es ist Aufgabe der Erfindung, Na-S-Speicherzellen mit einfachen Verfahren und Mitteln zu möglichst hohen Anteilen brauchbarer, wiederverwertbarer Stoffe zu verarbeiten. Die Lösung erfolgt entsprechend den Merkmalen von Anspruch 1. Hierbei bieten sich erfindungsgemäß folgende Varianten an:

### Variante 1:

Die Batterie bzw. einzelne Zellen werden mechanisch zerkleinert durch Shreddern o.ä. Dies kann, um eine Oxidation zu verhindern, unter Inertgas oder Vakuum oder vorzugsweise unter Wasser geschehen. Der Einsatz von Wasser bietet den Vorteil, daß die exotherme Reaktion des eventuell noch vorhandenen Natriummetalls abgefangen werden kann und damit die Zerkleinerungsvorrichtung, z.B. der Shredder geschont wird. Weiterhin wird schon beim Zerkleinern der Lösevorgang gestartet, was zu einer Zeitersparnis führt.
Entstehender Wasserstoff kann zu Heizzwecken verwendet werden. Die Zerkleinerung sollte Teile von 0,1 cm bis 5 cm, vorzugsweise ca. 1 cm erzeugen.

Die Lösereaktion des Polysulfids und des festen Schwefels kann in einem Temperaturintervall von Raumtemperatur bis 200°C erfolgen, vorzugsweise wird bei 120 °C gearbeitet. Für die Lösereaktion ist in der Regel, abhängig vom Batterietyp, keine Zugabe von Chemikalien, wie z.B. Lauge, notwendig. Nach dem Lösen kann, in der Regel, ohne Überführung der Lösung in einen anderen Reaktor, durch Zugabe eines Oxidationsmittels das gesamte Polysulfid, das aus dem festen Schwefel gebildet wurde, zu Sulfat oxidiert werden. Für die Oxidation wird vorzugsweise Wasserstoffperoxid eingesetzt. Für einen vollständigen Umsatz muß der pH-Wert während der Reaktion immer auf einem Wert über pH8 gehalten werden. Hierzu wird Lauge, vorzugsweise Natriumhydroxid verwendet. Nach Abtrennung der Flüssigkeit wird der Rückstand mit Wasser gewaschen. Das anfallende Waschwasser wird im Löseprozeß eingesetzt. Die gewaschenen Feststoffe können in Metalle und Nichtmetalle getrennt werden, falls eine Wiederverwertung der Komponenten wirtschaftlich vertretbar ist. Im anderen Fall ist eine problemlose Entsorgung, wie z.B. Deponie, möglich. Die Salzlösung kann direkt oder nach Eindampfung, wobei das anfallende Wasser wieder in den Wasch- oder Löseprozeß eingespeist wird, entsorgt oder einer Verwertung zugeführt werden.

### Variante 2:

Zerkleinerungs-, Löse- und Trennvorgang erfolgen, ebenso wie die Behandlung des festen Rückstandes, wie unter 1 beschrieben.
Die Lösung wird mit Säure, vorzugsweise Schwefelsäure, und Oxidationsmittel, vorzugsweise Wasserstoffperoxid, zur Reaktion gebracht. Die Reaktionstemperatur kann dabei von Raumtemperatur bis 150°C, vorzugsweise, am Ende der exothermen Reaktion bei 120°C, liegen. Dabei entsteht elementarer Schwefel. Entstehender Schwefelwasserstoff wird in situ zu Sulfat oxidiert. Wird die Temperatur über dem Schmelzpunkt von Schwefel gehalten, bildet sich schnell eine Phase von flüssigem Schwefel, der problemlos flüssig abgezogen, aufgereinigt und recycliert werden kann. Die Entsorgung der Lösung und der Feststoffe erfolgt wie unter 1.

### Variante 3:

Zerkleinerungs-, Löse- und Trennvorgang erfolgen, ebenso wie die Behandlung des festen Rückstandes, wie unter 1 beschrieben.
Die Lösung wird mit Säure, vorzugsweise Schwefelsäure, behandelt. Bei diesem Vorgang entsteht Schwefel, der wie in 2 abgezogen wird. Parallel entstehender Schwefelwasserstoff wird abgeleitet, ausgekocht bzw. mit Gas, vorzugsweise Stickstoff, gestrippt. Er wird als Chemikalie verwendet oder in einer Clausanlage zu weiterem Schwefel umgesetzt. Die Reinigung dieses Schwefels erfolgt ggf. zusammen mit dem abgezogenen Schwefel.
Die Salzlösung und die Feststoffe werden wie in 1 entsorgt.

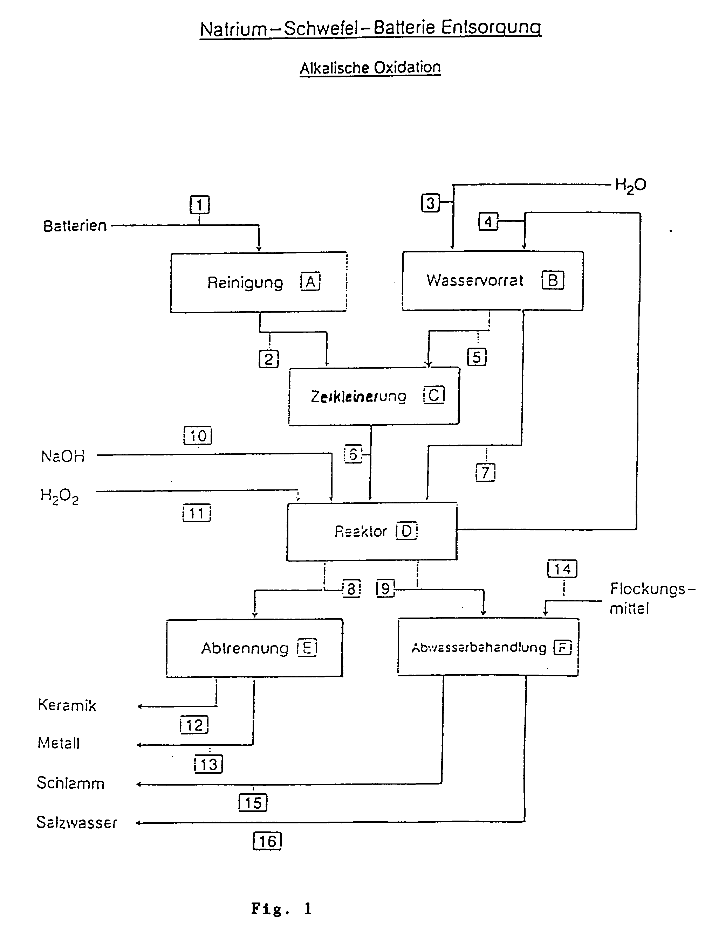

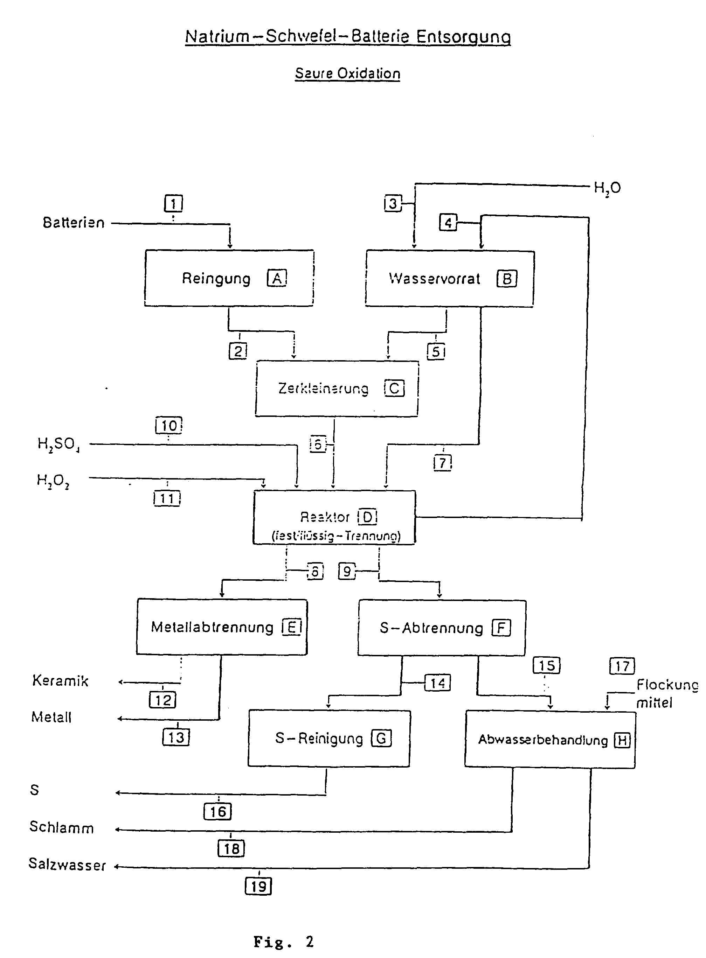

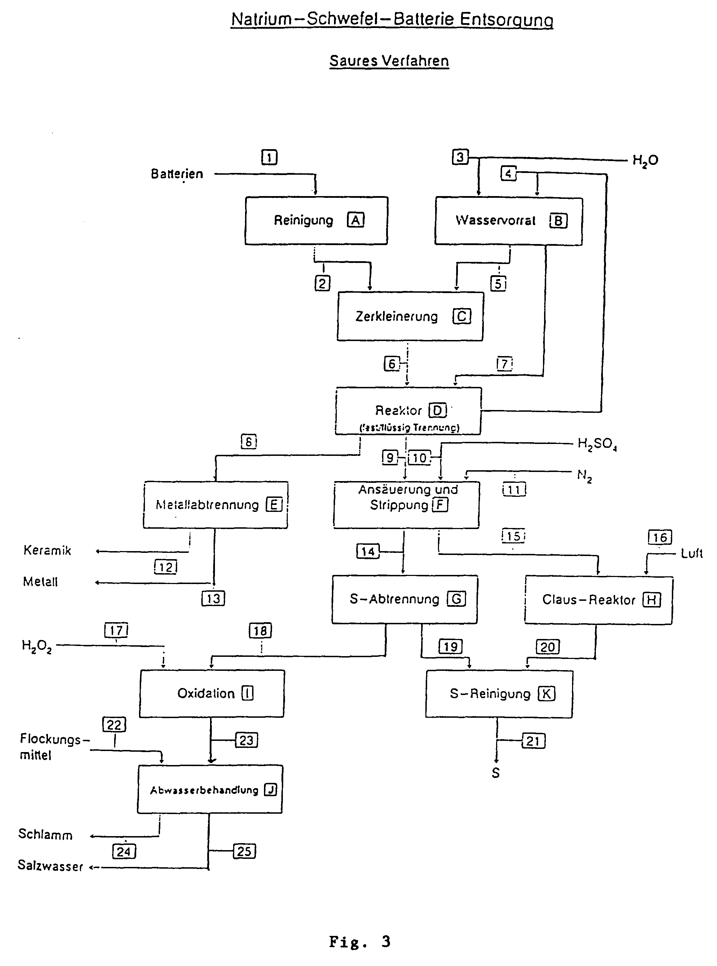

Die Varianten sind schematisch in den Figuren 1 bis 3 dargestellt.

Den Verfahrensvarianten ist gemeinsam, daß zunächst die Speicherzellen in Gegenwart von Wasser zerkleinert und die löslichen Bestandteile des elektrischen Elements zu einer Natrium-Polysulfid-Lösung gelöst werden. Gleichzeitig oder danach erfolgt die Zugabe von vorzugsweise Natronlauge oder Schwefelsäure, wodurch ganz oder teilweise Natriumsulfat gebildet wird. Die konstruktiven Bestandteile der Zelle, d.h. Zellwand, Elektroden, Keramik etc. können zu jeder Zeit abgetrennt werden, sobald Na-Polysulfid gelöst ist.

Die Menge des gebildeten Natriumsulfats kann durch Zugabe von wäßriger Wasserstoffperoxid-Lösung erhöht werden. Schwefelwasserstoff wird zusammen mit H₂O₂-Lösung zu Schwefel und/oder Sulfat umgesetzt. Natriumsalz kann dabei als einheitliches Produkt entstehen, das auf bekannte Weise eingedampft, ggf. gereinigt und kristallisiert wird.

Schwefelsäure zusammen mit H₂O₂-Lösung benötigt gegenüber alkalischer Oxidation wesentlich weniger Peroxid und läßt Natriumsulfat neben elementarem Schwefel entstehen, wobei eine Abtrennung des Schwefels erfolgen kann. Natriumsulfat und Schwefel sind auf bekanntem Wege zu reinigen.

Schwefelsäure ohne Zusatz von Peroxid läßt Na₂SO₄, Schwefel und Schwefelwasserstoff entstehen, wobei Schwefelwasserstoff ausgetrieben und z.B. in einer Clausanlage zu elementarem Schwefel oxidiert wird. Na₂SO₄ und primär gebildeter Schwefel können, wie oben geschildert, getrennt werden.

Ausgestaltungen des Verfahrens sind entsprechend den Unteransprüchen vorgesehen.

Das Zerkleinern von Batterien bzw. Einzelzellen, häufig mit Gehalten von etwa 40g Chemikalien pro Einzelzelle, erfolgt mit Brech- bzw. Schneidanlagen, zweckmäßig durch Schreddern unter Wasser oder unter Berieselung mit Wasser, sofern für eine Inertisierung des Gasraumes gesorgt wird. Dabei sollen Teile von 0,1 bis 5 cm, vorzugsweise 0,2 bis 2 cm Durchmesser entstehen. Reste von Natrium aus nicht völlig entladenen Zellen werden durch Wasser unschädlich gemacht. Dabei entstehender Wasserstoff kann abgeführt werden. Bei der Zerkleinerung beginnt die Lösereaktion des Na-Polysulfids, die unter Flüssigkeitsbewegung bei Temperaturen zwischen Raumtemperatur und 200°C, vorzugsweise bei 80 bis 120°C, nach Überführung in einen Reaktor fortgesetzt wird. Die Lösungsgeschwindigkeit von Na-Polysulfid wird durch erhöhte Temperatur gesteigert und beträgt bei 80°C in einem Beispiel etwa 10 min. Gesättigte Lösungen von etwa 260 g/l bei mittlerer Zusammensetzung Na₂S_{2,7} werden mit Wasser erreicht. Die Lösereaktion und die nachfolgenden Reaktionen zur Verwertung der aktiven Substanzen Natrium/Schwefel werden bevorzugt in einem Reaktor ausgeführt.
Der Reaktor ist bevorzugt ein geschlossener Reaktor, ausgerüstet mit Zugabeeinrichtung, Gasableitung, Bodenabfluß, Heizung und Rührer. Zweckmäßig wird der Reaktor für erhöhten Druck bis 20 bar und für verminderten Druck ausgelegt. Die Überwachung der Reaktion erfolgt bevorzugt durch Leitfähigkeitsmessung.
Für die Aufarbeitung der Na-Polysulfid-Lösung gibt es mehrere Varianten.

Natronlauge mit Zusatz von H₂O₂-Lösung, zweckmäßig bis 30% (m/m), läßt nur Natriumsulfat entstehen. Die Reaktion ist bei Temperaturen von 80 bis 100°C in weniger als 1 min beendet. Zur vollständigen Oxidation des Schwefels sind 9,1 Mol H₂O₂ pro Mol Na₂S_{2,7} erforderlich, d.h. eine vergleichsweise große Menge. Diese Aufarbeitung eignet sich daher bevorzugt für kleinere Anlagen, zumal außer dem Reaktor keine weiteren Anlagen benötigt werden.

Die Weiterverarbeitung bzw. Aufarbeitung der Na-Polysulfid-Lösung kann auch unter sauren Bedingungen, vorzugsweise unter Zusatz von Schwefelsäure oder ggf. wäßriger Salzsäure erfolgen.
Es kann mit und ohne Zusatz von H₂O₂-Lösung gearbeitet werden.
Die saure Oxidation mit Schwefelsäure und H₂O₂-Lösung verbraucht pro Mol Na₂S_{2,7} nur ein Mol H₂SO₄ und ein Mol H₂O₂ unter Bildung von Natriumsulfat und Schwefel. Temperaturen um 120°C sind brauchbar. Bei 120°C kann sich der Schwefel am Reaktorboden sammeln und in flüssiger Form abgelassen und verwertet werden. Der geringe Verbrauch von H₂O₂ ist vorteilhaft.

Eine besonders vorteilhafte Ausführung des Verfahrens hinsichtlich einer Minimierung aus dem Prozeß auszuschleusender Produkte sieht vor, daß Natriumsalz mittels Elektrodialyse zu Natronlauge und Säure zu zerlegen und vorzugsweise die Säure im Prozeß wieder zu verwenden. Bei Bildung von Na₂SO₄ kann vorteilhaft eine Fällung mit CaO durchgeführt werden, wobei der gebildete Gips und NaOH einer Weiterverwertung bzw. Vermarktung zugeführt werden können.
Die saure Umsetzung von Na-Polysulfid-Lösung kann auch ohne Zusatz von H₂O₂ oder anderen Oxidationsmitteln erfolgen. Dann bildet sich stöchiometrisch Natriumsulfat,
Schwefelwasserstoff und elementarer Schwefel.
Schwefelwasserstoff kann ggf. bei erhöhter Temperatur mit Inertgasen wie Stickstoff ausgetrieben und in einer Clausanlage mit Luftsauerstoff zu Schwefel in üblicher Art oxidiert werden. Diese Variante eignet sich für den Standort einer Clausanlage und für die Entsorgung großer Mengen von Speicherzellen. Es wird nur ein Mol H₂SO₄ pro Mol Na₂S_{2,7} verbraucht.

### Beispiel 1:

### Alkalische Oxidation

In einem druckfesten Reaktor von 0,5 l Inhalt werden 20g Natriumpolysulfid (0,15 mol berechnet als Na₂S_{2,7}) in wäßriger Lösung vorgelegt. Nach Zugabe von 21,8 g (0,54 mol) Natriumhydroxyd wird unter Rühren 46,2 g (1,36 mol) Wasserstoffperoxid als 30%ige (m/m) Lösung zugegeben. Die gemessene Leitfähigkeit zeigt, daß die Reaktion bei Raumtemperatur in 10 bis 12 min abgeschlossen ist. Der Umsatz verläuft quantitativ und es werden 58 g (0,4 mol) Natriumsulfat als wäßrige Lösung enthalten.

### Beispiel 2:

### Saure Oxidation

In dem Reaktor werden aus gebrauchten Na-S-Speicherzellen durch Zugabe von Wasser eine Lösung von 20 g (0,15 mol) Natriumpolysulfid hergestellt und die festen Bestandteile der Zelle entfernt. Es wird eine Mischung von 14,7 g (0,15 mol) Schwefelsäure in 5,1 g (0,15 mol) Wasserstoffperoxid als 30%ige (m/m) Lösung unter Rühren zugefügt. Der verschlossene Reaktor wird anschließend auf 120°C erhitzt. Dabei schmilzt der ausgefallene Schwefel und bildet Tröpfchen, die sich auf dem Reaktorboden sammeln. Der Schwefel kann entnommen werden. Es werden 21,5 g (0,15 mol) Natriumsulfat und 13 g (0,4 mol) Schwefel erhalten.

### Beispiel 3:

### Ansäuern und Strippung

In dem Reaktor wird eine gleiche Lösung von 20 g Natriumpolysulfid vorgelegt. Es werden 14, 7 g (0,15 mol) Schwefelsäure unter Rühren zugefügt. Das entstehende Schwefelwasserstoffgas wird mit Stickstoff aus dem Reaktor gestrippt und in einer Waschflasche mit Natronlauge absorbiert. Nach Ende der Reaktion wird, um größere Tröpfchen zu erhalten, der Reaktor auf 120°C Innentemperatur erhitzt. Nach dem Abkühlen werden 8,2 g (0,25 mol) fester Schwefel und 21,4 g (0,15 mol) Natriumsulfat gefunden.
Schwefelwasserstoff fällt in einer Menge von 5,1g (0,15 mol) an.

## Patentansprüche

1. Verfahren zur Entsorgung von Natrium-Schwefelspeicherzellen, dadurch gekennzeichnet, daß die Speicherzellen in Gegenwart eines unbrennbaren Fluids wie Wasser und/oder Schutzgas oder unter Vakuum zerkleinert und in einem Reaktor die freigesetzten Chemikalien der Zellen unter Rühren zu einer wäßrigen Natrium-Polysulfid-Lösung verarbeitet werden, worauf aus der Lösung die festen Stoffe abgetrennt, mit Wasser gewaschen und einer Deponie oder Wiederverwertung zugeführt werden und die Lösung unter Bildung von Natriumsalz, Schwefelwasserstoff und Schwefel weiter aufgeschlossen wird.

2. Verfahren nach Anspruch 1, dadurch gekennzeichnet, daß entstehender Wasserstoff aufgefangen und vorzugsweise für Heizzwecke verwendet wird.

3. Verfahren nach den Ansprüchen 1 und 2, dadurch qekennzeichnet, daß die Feststoffe der Zelle nach der Zerkleinerung oder nach der Bildung der wäßrigen Natrium-Polysulfid-Lösung abgetrennt werden.

4. Verfahren nach einem oder mehreren der Ansprüche 1 bis 3, dadurch gekennzeichnet, daß in einem Temperaturintervall von Raumtemperatur bis 200°C, vorzugsweise bei 120°C gearbeitet wird.

5. Verfahren nach einem der Ansprüche 1 bis 4, dadurch gekennzeichnet, daß zur Weiterverwertung die Natrium-Polysulfid-Lösung mit Lauge, vorzugsweise Natronlauge, oder mit Säure, vorzugsweise Schwefelsäure, ggf. unter Zusatz von Oxidationsmitteln, insbesondere H₂O₂-Lösung, umgesetzt wird.

6. Verfahren nach Anspruch 5, dadurch gekennzeichnet, daß die Umsetzung mit Natronlauge und mit H₂O₂ unter Bildung von Natriumsulfat erfolgt, wobei der pH-Wert während der Reaktion auf einem Wert über pH8 gehalten wird.

7. Verfahren nach Anspruch 5, dadurch gekennzeichnet, daß die Umsetzung mit H₂SO₄ und H₂O₂-Lösung unter Bildung von Natriumsulfat und Schwefel und darauf folgender Trennung der Produkte erfolgt.

8. Verfahren nach Anspruch 7, dadurch gekennzeichnet, daß die Abtrennung des Schwefels durch Erhitzen der Lösung auf mindestens Schmelztemperatur des elementaren Schwefels, Sammeln des Schwefels am Boden des Reaktors und Ablassen der Schwefels durch das Bodenventil erfolgt.

9. Verfahren nach Anspruch 5, dadurch gekennzeichnet, daß die Umsetzung mit Säure, vorzugsweise Schwefelsäure unter Bildung von Natriumsalz, Schwefelwasserstoff und Schwefel erfolgt.

10. Verfahren nach einem oder mehreren der Ansprüche 1 bis 9, dadurch gekennzeichnet, daß bei der Bildung von elementarem Schwefel entstehendes Schwefelwasserstoff-Gas in situ zu Sulfat oxidiert wird.

11. Verfahren nach Anspruch 9, dadurch gekennzeichnet, daß Schwefelwasserstoff abgetrieben und weiterverarbeitet und Schwefel gesammelt und abgetrennt wird.

12. Verfahren nach einem oder mehreren der Ansprüche 1 bis 11, dadurch gekennzeichnet, daß bei der Aufbereitung eingesetztes Waschwasser mindestens größtenteils im Kreislauf geführt und beim Zerkleinern der Zellen bzw. zum Lösen der Chemikalien eingesetzt wird.

13. Verfahren nach einem oder mehreren der Ansprüche 1 bis 12, dadurch gekennzeichnet, daß das Natriumsalz unter Einsatz der Elektrodialyse zu Natronlauge und Säure umgewandelt wird.

14. Verfahren nach Anspruch 13, dadurch gekennzeichnet, daß die rückgebildete Säure im Prozeß wiederverwendet wird.

15. Verfahren nach einem der Ansprüche 1 bis 14, dadurch gekennzeichnet, daß bei Bildung von Natriumsulfat eine Fällung mit Kalziumoxid erfolgt und der gebildete Gips und/oder die gebildete Natronlauge einer Weiterverwertung oder Vermarktung zugeführt werden.

## Claims

1. A Process for the disposal of sodium-sulfur storage cells, characterized in that the storage cells are crushed or disintegrated in the presence of a non-inflammable fluid such as water and/or protective gas or under vacuum and the released chemicals of the cells are processed, while stirring, to form an aqueous sodium-polysulfide solution, whereupon the solid materials are separated from the solution, washed with water and are dumped on a dumping ground or supplied to a recycling process, and the solution is disintegrated forming sodium salt, hydrogen sulfide and sulfur.

2. The process according to claim 1, characterized in that nascent hydrogen is collected and, preferably, is used for heating purposes.

3. The process according to claims 1 and 2, characterized in that the solid materials of the cell are separated following disintegration or following the formation of the aqueous sodium-polysulfide solution.

4. The process according to one or more of claims 1 to 3, characterized in that the process is carried out within a temperature interval ranging from room temperature to 200°C, and preferably at approximately 120°C.

5. The process according to any one of claims 1 to 4, characterized in that, for recycling, the sodium-polysulfide solution is reacted with lye, preferably sodium hydroxide solution, or with acid, preferably sulfuric acid, optionally adding oxidants, particularly H₂O₂-solution.

6. The process according to claim 5, characterized in that the reaction with sodium hydroxide solution and with H₂O₂ yields sodium sulfate, whereby the pH value is maintained above pH 8 during the reaction.

7. The process according to claim 5, characterized in that the reaction with H₂SO₄ and H₂O₂-solution produces sodium sulfate and sulfur and that the products are subsequently separated.

8. The process according to claim 7, characterized in that the separation of the sulfur is effected by way of heating the solution at least to the melt temperature of elementary sulfur, collecting the sulfur at the bottom of the reactor and draining the sulfur through the bottom valve.

9. The process according to claim 5, characterized in that the reaction with acid, preferably sulfuric acid, yields sodium salt, hydrogen sulfide and sulfur.

10. The process according to one or more of the claims 1 to 9, characterized in that hydrogen sulfide gas which is produced when elementary sulfur is formed is oxidated in situ to sulfate.

11. The process according to claim 9, characterized in that hydrogen sulfide is expulsed and reprocessed, and sulfur is collected and separated.

12. The process according to one or more of claims 1 to 11, characterized in that washing water used in the reprocessing is, at least for the most part, recycled and is employed when crushing the cells and for dissolving the chemicals, respectively.

13. The process according to one or more of claims 1 to 12, characterized in that the sodium salt is converted to sodium hydroxide solution and acid by way of electrodialysis.

14. The process according to claim 13, characterized in that the regenerated acid is reused in the process.

15. The process according to any one of the claims 1 to 14, characterized in that if sodium sulfate is formed precipitation is effected with calcium oxide and the resultant gypsum and/or the resultant sodium hydroxide solution are supplied to a recycling process or marketed.

## Revendications

1. Procédé pour l'élimination de cellules d'accumulation au sodium-soufre, caractérisé en ce que l'on déchiquette les cellules d'accumulation en présence d'un fluide incombustible, comme l'eau et/ou un gaz protecteur et on transforme les produits chimiques libérés des cellules sous agitation dans un réacteur en une solution aqueuse de polysulfure de sodium, puis on sépare les substances solides de la solution, on lave ces substances solides à l'eau et on les envoie à une décharge ou à une réexploitation et on poursuit le traitement de la solution sous formation de sel de sodium, d'acide sulfhydrique et de soufre.

2. Procédé suivant la revendication 1, caractérisé en ce que l'on recueille l'hydrogène formé et on l'utilise, de préférence, dans un but de chauffage.

3. Procédé suivant les revendications 1 et 2, caractérisé en ce que l'on sépare les substances solides de la cellule après le déchiquetage ou après la formation de la solution aqueuse de polysulfure de sodium.

4. Procédé suivant une ou plusieurs des revendications 1 à 3, caractérisé en ce que l'on travaille dans un intervalle de températures qui varie de la température ambiante à 200°C, de préférence à 120°C.

5. Procédé suivant l'une quelconque des revendications 1 à 4, caractérisé en ce que, en vue de la poursuite du traitement, on fait réagir la solution de polysulfure de sodium avec une lessive, de préférence une lessive sodique, ou avec un acide, de préférence l'acide sulfurique, en recourant éventuellement à l'addition d'agents d'oxydation, plus particulièrement une solution de H₂O₂.

6. Procédé suivant la revendication 5, caractérisé en ce que la réaction avec la lessive sodique et avec H₂O₂ s'effectue sous formation de sulfate de sodium, où l'on maintient le pH au cours de la réaction à une valeur supérieure à 8.

7. Procédé suivant la revendication 5, caractérisé en ce que la réaction avec H₂SO₄ et la solution de H₂O₂ s'effectue sous formation de sulfate de sodium et de soufre et qu'on fait suivre cette réaction d'une séparation des produits.

8. Procédé suivant la revendication 7, caractérisé en ce que la séparation du soufre s'effectue par chauffage de la solution jusqu'à au moins la température de fusion du soufre élémentaire, collecte de soufre au fond du réacteur et évacuation du soufre par la vanne du fond.

9. Procédé suivant la revendication 5, caractérisé en ce que la réaction avec l'acide, de préférence 1' acide sulfurique, s'effectue sous formation de sel de sodium, d'acide sulfhydrique et de soufre.

10. Procédé suivant une ou plusieurs des revendications 1 à 9, caractérisé en ce que, au cours de la formation de soufre élémentaire, on oxyde l'acide sulfhydrique gazeux qui se forme en sulfate in situ.

11. Procédé suivant la revendication 9, caractérisé en ce que l'on évacue l'acide sulfhydrique et on en poursuit le traitement et on rassemble et sépare le soufre.

12. Procédé suivant une ou plusieurs des revendications 1 à 11, caractérisé en ce que, lors du traitement, l'eau de lavage mise en oeuvre est au moins en grande partie recyclée et employée au cours du déchiquetage des cellules ou pour la dissolution des produits chimiques.

13. Procédé suivant une ou plusieurs des revendications 1 à 12, caractérisé en ce que le sel de sodium est converti en lessive sodique et en acide en recourant à l'électrodialyse.

14. Procédé suivant la revendication 13, caractérisé en ce que l'acide reproduit au cours du processus est réexploité.

15. Procédé suivant l'une quelconque des revendications 1 à 14, caractérisé en ce que, au cours de la formation du sulfate de sodium, s'opère une précipitation avec de l'oxyde de calcium et on envoie le gypse formé et/ou la lessive sodique formée à une exploitation ultérieure ou à une commercialisation.
